# EUROPEAN PATENT APPLICATION

(11) **EP 4 202 650 A1**
(43) Date of publication of application: **28.06.2023**
(21) Application number: 20951679.8
(22) Date of filing: 06.11.2020
(51) Int. Cl.: G06F 9/28, G06F 9/48, G06F 9/50, G06F 9/30, G06F 13/14

(54) **METHOD FOR STORING OUTPUT DATA OF HARDWARE ACCELERATOR IN MEMORY, METHOD FOR READING INPUT DATA OF HARDWARE ACCELERATOR FROM MEMORY, AND HARDWARE ACCELERATOR THEREFOR**

(30) Priority: 24.08.2020 KR 20200106462
(71) Applicant: Openedges Technology, Inc., Seoul 06252 (KR)
(72) Inventor: CHOI, Jung Hwan, Seongnam-si, Gyeonggi-do 13490 (KR); YANG, Sung Mo, Hwaseong-si, Gyeonggi-do 18496 (KR)
(74) Representative: HGF
(86) International application number: PCT/KR2020/015491
(87) International publication number: WO 2022/045449

(57) **Abstract**

Disclosed is a data processing method of sequentially reading a plurality of non-compressed data groups or a plurality of compressed data groups corresponding to each of the non-compressed data groups from a memory by taking priority in a first direction of dimension over a second direction of dimension of an input array, when it is determined that the elements should be sequentially input to the data operation part by taking priority in the first direction of dimension over the second direction of dimension.

## Description

### TECHNICAL FIELD

The present invention relates to a computing technology, and relates to a technology for effectively managing input and output data of a hardware accelerator.

### BACKGROUND ART

The description of the present invention begins with an example of a structure of a neural network accelerator, which is a kind of hardware accelerator that is a subject of the present invention.

### <Neural network>

A neural network is a well-known technology used as one of the technologies for implementing artificial intelligence.

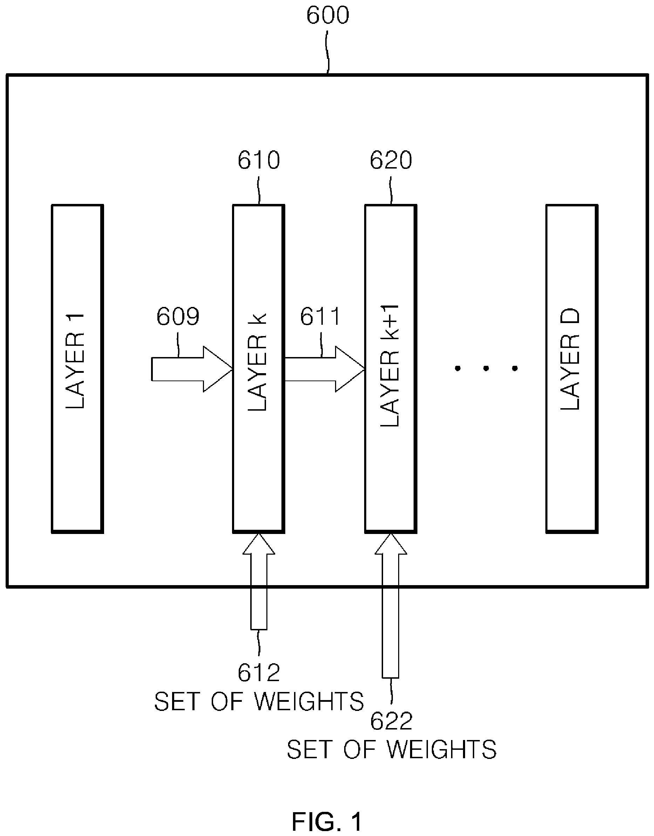

FIG. 1 conceptually illustrates a partial configuration of a neural network proposed to aid understanding of the present invention.

A neural network 600 according to an embodiment may include a plurality of layers. Conceptually, a first layer 610 among the plurality of layers can output output data 611 called a feature map or activation. Also, the output data 611 output from the first layer 610 may be provided as input data to a second layer 620 downstream of the first layer 610.

Each of the layers may be regarded as a data conversion function module or data operation part that converts input data, which is input the layer, into predetermined output data. For example, the first layer 610 may be regarded as a data conversion function module that converts input data 609 input to the first layer 610 into output data 611. In order to implement such a data conversion function module, a structure of the first layer 610 should be defined. Input variables for storing the input data 609 input to the first layer should be defined according to the structure of the first layer 610, and output variables indicating the output data 611 output from the first layer 610 should be defined. The first layer 610 can use a set of weights 612 to perform a function thereof. The set of weights 612 may be values by which the input variables are multiplied to calculate the output variables from the input variables. The set of weights 612 may be one of various parameters of the neural network 600.

An operation process for calculating the output data 611 output from the first layer 610 from the input data 609, which is input to the first layer 610 of the neural network 600, for example, may be implemented in software or in hardware.

### <Hardware implementation of neural network operations>

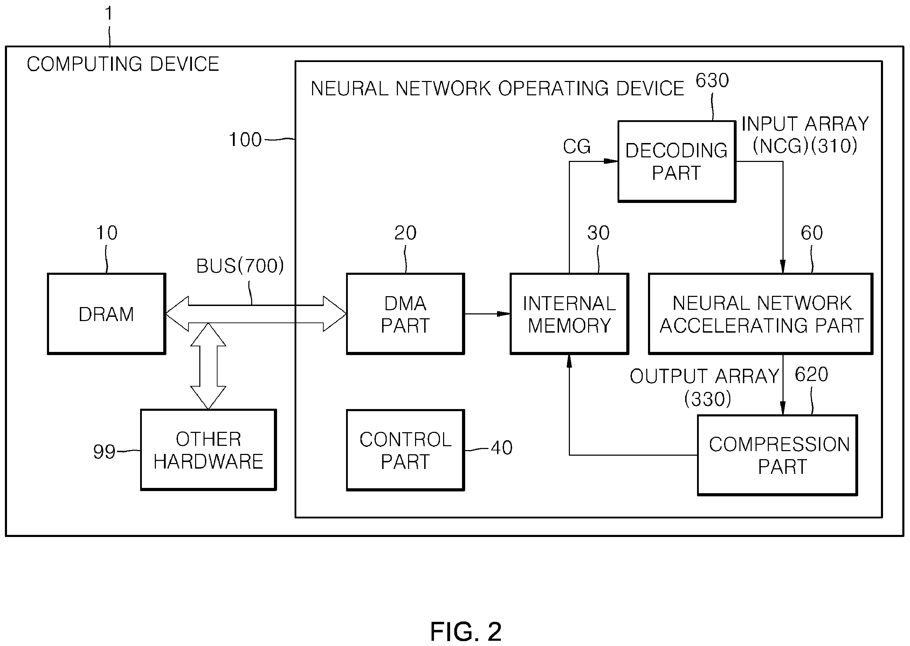

FIG. 2 illustrates a main structure of some of a neural network operating device including a neural network accelerating part that implements the function of the neural network in hardware and a computing device including the same.

The computing device 1 can include a dynamic random access memory (DRAM) 10, a neural network operating device 100, a bus 700 connecting the DRAM 10 and the neural network operating device 100, and other hardware 99 connected to the bus 700.

In addition, the computing device 1 can further include a power supply part, a communication part, a main processor, a user interface, a storage part, and peripheral device part, which are not illustrated. The bus 700 may be shared by the neural network operating device 100 and other hardware 99.

The neural network operating device 100 can include a direct memory access (DMA) part 20, a control part 40, an internal memory 30, a compression part 620, a decoding part 630, and a neural network accelerating part 60.

In this specification, decoding may also be referred to as decompression. Accordingly, the term decoding can also be expressed as decompress in English.

In this specification, compression may also be expressed as encoding. Accordingly, compression can be translated as encoding.

In order for the neural network accelerating part 60 to operate, an input array 310 should be provided as input data of the neural network accelerating part 60.

The input array 310 may be a set of data in the form of a multi-dimensional array. The input array 310 can include, for example, the input data 609 and the set of weights 612 described in FIG. 1. In this specification, the input array may also be referred to as input data.

The input array 310 provided to the neural network accelerating part 60 one that is output from an internal memory 30.

The internal memory 30 can receive at least a part or all of the input array 310 from the DRAM 10 through the bus 700. In this case, in order to move data stored in the DRAM 10 to the internal memory 30, the control part 40 and the DMA part 20 may control the internal memory 30 and the DRAM 10.

When the neural network accelerating part 60 operates, an output array 330 can be generated based on the input array 310.

The output array 330 can be a set of data in the form of a multi-dimensional array. In this specification, the output array may also be referred to as output data.

The generated output array 330 can be first stored in the internal memory 30.

The output array 330 stored in the internal memory 30 can be recorded in the DRAM 10 under the control of the control part 40 and the DMA part 20.

The control part 40 can comprehensively control the operations of the DMA part 20, the internal memory 30, and the neural network accelerating part 60.

In one example of implementation, the neural network accelerating part 60 can perform, for example, the function of the first layer 610 illustrated in FIG. 1 during a first time period, and perform, for example, the function of the second layer 620 illustrated in FIG. 1 during a second time period.

In one embodiment, a plurality of neural network accelerating parts, each of which performs the same function as the neural network accelerating part 60 illustrated in FIG. 2, may be provided to respectively perform operations requested by the control part 40 in parallel.

In one example of implementation, the neural network accelerating part 60 can sequentially output all data of the output array 330 in a given order according to time, rather than outputting all data at once.

The compression part 620 can compress the output array 330 to reduce an amount of data of the output array 330 and provide the compressed output array 330 to the internal memory 30. As a result, the output array 330 can be stored in the DRAM 10 in a compressed state.

The input array 310 input to the neural network accelerating part 60 may be one that is read from the DRAM 10. Data read from the DRAM 10 may be compressed data, and the compressed data can be decoded by the decoding part 630 and converted into the input array 310 before being provided to the neural network accelerating part 60.

<Characteristics of neural network operation using hardware>

It is preferable that, while the neural network accelerating part 60 illustrated in FIG. 2 performs an operation to generate the output array 330 from the input array 310 during the first time period, the internal memory 30 acquires new data from the DR_AM 10.

That is, for example, the neural network accelerating part 60 can perform the function of the first layer 610 by receiving the input array 609 of FIG. 1 and the first set of weights 612 during the first time period.

And the neural network accelerating part 60 can perform the function of the second layer 620 by receiving the input array 611 of FIG. 1 and a second set of weights 622 during the second time period.

In this case, it is preferable that, while the neural network accelerating part 60 performs the function of the first layer 610, the internal memory 30 acquires the input array 611 and the second set of weights 622 from the DRAM 10.

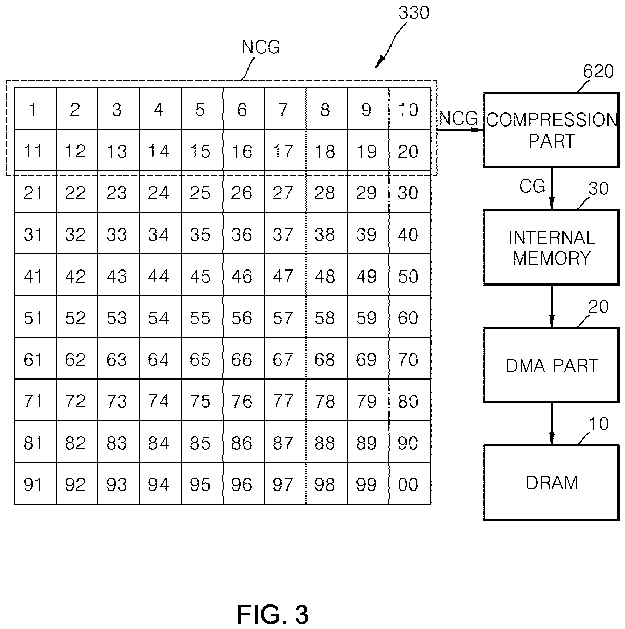

FIG. 3 illustrates an exemplary structure of the output array 330 of FIG. 2.

The output array 330 may be a set of data having a multi-dimensional structure. In FIG. 3, data having a two-dimensional structure is illustrated for convenience, but the concept of the present invention described later can be applied as it is even when the output array 330 has a three-dimensional or higher structure.

In one example of implementation, the output array 330 can defined by dividing into several non-compressed data groups NCG, only a first non-compressed data group of the non-compressed data groups is recorded in the internal memory 30 first, and then the first non-compressed data group recorded in the internal memory 30 can be deleted from the internal memory 30 after being moved to the DRAM 10. Then, only a second non-compressed data group of the output array 330 can be recorded in the internal memory 30 first, and then the second non-compressed data group recorded in the internal memory 30 can be deleted from the internal memory 30 after being moved to the DRAM 10. Such a method can be adopted, for example, when a size of the internal memory 30 is not large enough to store all of one set of output arrays 330.

Furthermore, when recording an arbitrary non-compressed data group NCG of the output array 330 in the internal memory 30, instead of recording the arbitrary non-compressed data group NCG as it is, a compressed data group CG obtained by first compressing the arbitrary non-compressed data group NCG can be recorded in the internal memory 30. Then, the compressed data group CG recorded in the internal memory 30 can be moved to the DRAM 10.

In order to generate each compressed data group by compressing each non-compressed data group, a separate data buffer not illustrated in FIG. 2 may be provided.

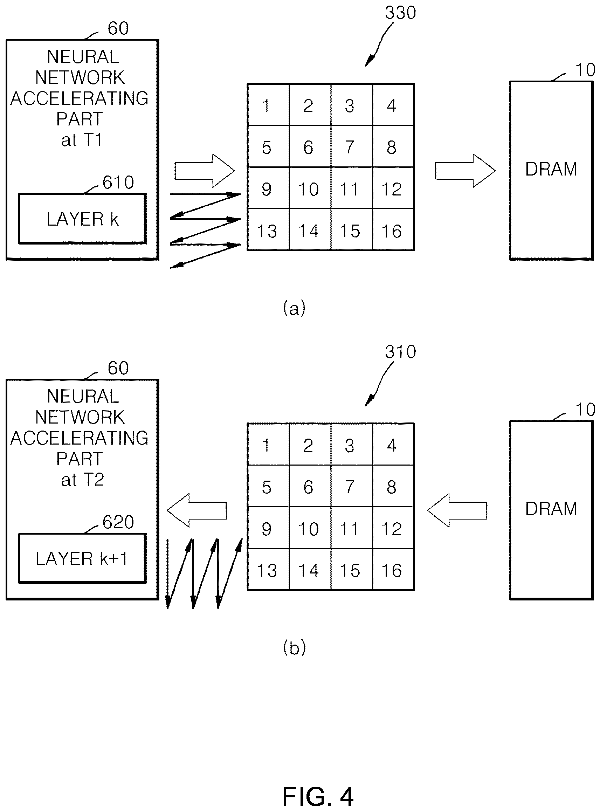

FIG. 4 is a diagram for describing some constraints considered in the present invention which are the constraints that may occur in some embodiments.

Referring to (a) of FIG. 4, the neural network accelerating part 60 may be configured to perform the function of a layer k 610 in a first time period T1. In this case, the neural network accelerating part 60 can output the output array 330, and can output elements of the output data 330 in the order of indexes 1, 2, 3, 4, ..., 15, 16 shown in FIG. 4 (refer to a zigzag arrow in (a) of FIG. 4) without outputting the elements at once. The output array 330 output in the first time period T1 can be stored in the DRAM 10.

Also, referring to (b) of FIG. 4, in a second time period T2, the neural network accelerating part 60 can be configured to perform the function of a layer (k+1) 620. To this end, the neural network accelerating part 60 can request the output array 330 that has been recorded in the DRAM 10 as input data. In this case, there may be constraints that the neural network accelerating part 60 should receive the elements of the output array 330 in the order of indexes 1, 5, 9, 13, 2, 6, 10, 14, 3, 7, 11, 15, 4, 8, 12, 16 (refer to the zigzag arrow in (b) of FIG. 4).

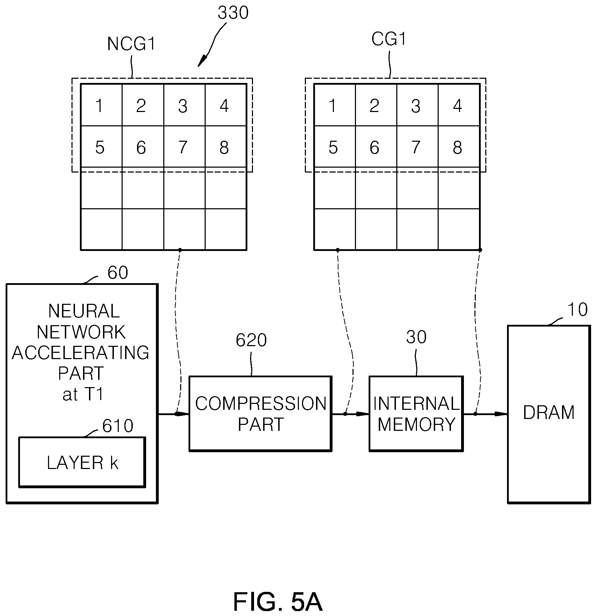

Under these constraints, if data processing and input/output are not properly designed, a problem that the time required for data processing increases and the utilization efficiency of the internal memory 30 decreases may occur. Such a problem will be described with reference to FIG. 4 and FIGS. 5a to 5c to be described later.

FIGS. 5a to 5c are diagrams presented to explain problems in a data processing method according to an embodiment.

When describing by referring to FIG. 5a, in the first time period T1, the neural network accelerating part 60 may be configured to perform the function of layer k 610. In this case, the neural network accelerating part 60 can sequentially output the elements corresponding to index 1 to index 8 that belong to a first non-compressed data group NCG1 of the output array 330 to complete the output of the first non-compressed data group NCG1. Next, the compression part 620 can generate a first compressed data group CG1 by compressing the completed first non-compressed data group NCG1. The first compressed data group CG1 can be temporarily stored in the internal memory 30 and moved to the DRAM 10.

The compression part 620 may include a data buffer.

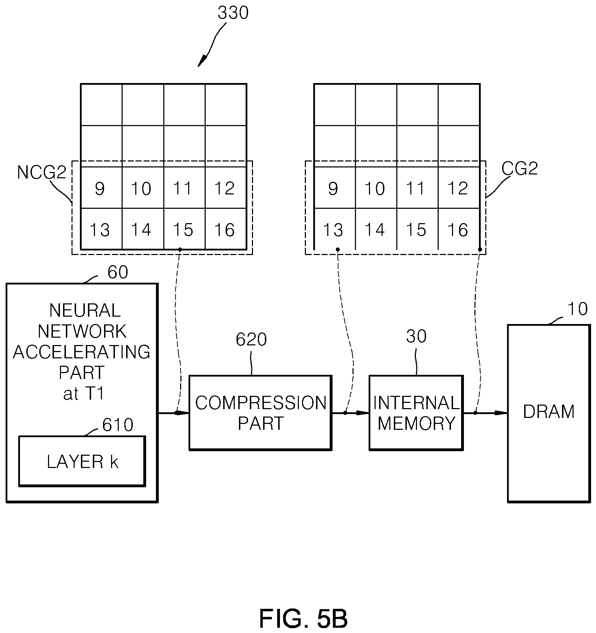

Next, when describing by referring to FIG. 5b, in the first time period T1, the neural network accelerating part 60 can sequentially output the elements corresponding to index 9 to index 16 that belong to a second non-compressed data group NCG2 of the output array 330 to complete output of the second non-compressed data group NCG2. Next, the compression part 620 can generate a second compressed data group CG2 by compressing the completed second non-compressed data group NCG2. The second compressed data group CG2 can be temporarily stored in the internal memory 30 and then moved to the DRAM 10.

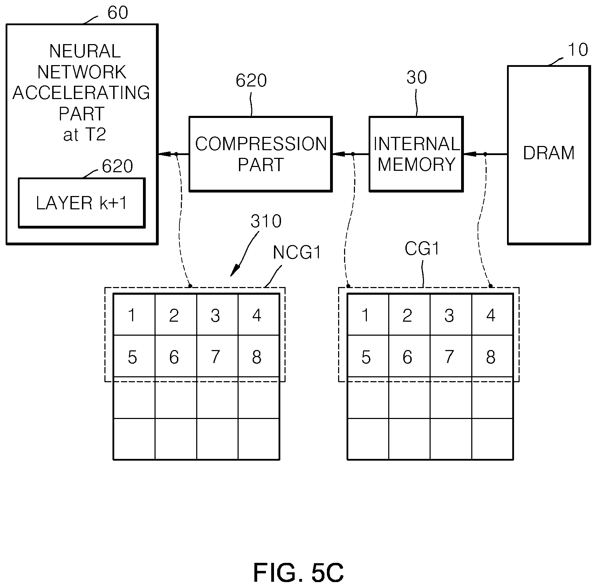

Now, when describing by referring to FIG. 5c, in the second time period T2, the neural network accelerating part 60 may be configured to perform the function of the layer (k+1) 620. In this case, as described above, there may be constrains that the neural network accelerating part 60 should receive inputs in the order of indexes 1, 5, 9, 13, 2, 6, 10, 14, 3, 7, 11, 15, 4, 8, 12, 16.

In this case, if only a part of the first compressed data group CG1 and a part of the second compressed data group CG2 are read from the DRAM 10, data cannot be input to the neural network accelerating part 60 by using only the read data. This is because the entirety of the first compressed data group CG1 is required in order to restore the first non-compressed data group NCG1 and the entirety of the second compressed data group CG2 is required in order to restore the second non-compressed data group NCG2.

Accordingly, first, all of the first compressed data group CG1 may be read from the DRAM 10 and stored in the internal memory 30 and the first compressed data group CG1 stored in the internal memory 30 may be restored using the decoding part 630 to prepare the first non-compressed data group NCG1. However, since there are no elements corresponding to index 9 and index 13 in the prepared first non-compressed data group NCG1, the elements corresponding to indexes 9 and 13 cannot be input to the neural network accelerating part 60 after inputting the elements corresponding to indexes 1 and 5 to the neural network accelerating part 60. Therefore, in order to solve this problem, the second compressed data group CG2 should be restored. As a result, there is a problem that data input to the neural network accelerating part 60 can be continuously performed only after restoring all the non-compressed data groups constituting the output array 330).

In this case, since a separate buffer for storing the data for each group output by the decoding part 630 is required or a certain space of the internal memory 30 should be borrowed and used, there is a problem that the use efficiency of computing resources is greatly reduced. Further, there is also a problem that data read from the DRAM 10 cannot be used in real time.

The contents described above are what the inventors of the present invention knew as background knowledge for creating the present invention, all of the contents described above should not be regarded as known to an unspecified majority at the time of filing of the present patent application. In addition, at least a part of the contents described above may constitute embodiments of the present invention.

### DISCLOSURE OF THE INVENTION TECHNICAL PROBLEM

In the present invention, in order to solve the problems described above, it is intended to provide a method of grouping (fragmenting) and compressing elements of an output array output by a data operation part of a hardware accelerator, and a scheduling technology for loading data stored in a DRAM after being grouped (fragmented).

### TECHNICAL SOLUTION

According to one aspect of the present invention, there may be provided a data processing method of processing, by a hardware accelerator 110 including a data operation part 610, an input array 310 to be input to the data operation part as the input array composed of a plurality of non-compressed data groups. The data processing method includes a process of sequentially reading, by the hardware accelerator, the plurality of non-compressed data groups or a plurality of compressed data groups corresponding to each of the non-compressed data groups from a memory 11 by taking priority in a first direction of dimension 91 over a second direction of dimension 92 of the input array, when it is determined that the elements should be sequentially input to the data operation part by taking priority in the first direction of dimension over the second direction of dimension, and a process of inputting, by the hardware accelerator, a series of elements of the input array disposed along the first direction of dimension to the data operation part if all of the series of elements are prepared.

In this case, the input array may be a matrix having a dimension of 2 or an array having a dimension of 3 or more.

In this case, each element may be the minimum unit of information constituting the input array. For example, when the input array is a two-dimensional matrix, each element may be data intersecting in a specific row and specific column of the matrix.

In this case, in the process of reading, when the plurality of non-compressed data groups or the plurality of compressed data groups are sequentially read, the plurality of non-compressed data groups or the plurality of compressed data groups may be read by group.

In this case, two or more data groups may be defined in the input array along the second direction of dimension.

In this case, the plurality of non-compressed data groups or the plurality of compressed data groups constituting the input array stored in the memory may be one that is sequentially stored in the memory by taking priority in the second direction of dimension over the first direction of dimension of the input array.

In this case, the input array 310 may be output data output by the data operation part before the process of receiving, and the output data may be one that is output by the data operation part by taking priority in the second direction of the dimension over the first direction of dimension of the output array.

In this case, the plurality of non-compressed data groups or the plurality of compressed data groups constituting the input array stored in the memory may be one that is sequentially stored in the memory by taking priority in the first direction of dimension over the second direction of dimension of the input array.

In this case, the input array 310 is output data output by the data operation part before the process of acquiring, and the output data may be one that is output by the data operation part by taking priority in the first direction of the dimension over the second direction of dimension of the output array.

In this case, the hardware accelerator may be configured to sequentially read the plurality of compressed data groups respectively corresponding to the plurality of non-compressed data groups constituting the input array from the memory 11 by taking priority in the first direction of dimension 91 over the second direction of dimension 92 of the input array, when it is determined that the elements should be sequentially input to the data operation part by taking priority in the first direction of dimension over the second direction of dimension. And the process of inputting may include a process of decoding each of the read compressed data groups to generate each non-compressed data group NCG corresponding to each compressed data group, and a process of inputting a series of elements of the input array disposed along the first direction of dimension to the data operation part if all of the series of elements of the input array are prepared from the generated non-compressed data groups.

According to another aspect of the present invention, there may be provided a data processing method including a process of outputting, by a data operation part 610 of a hardware accelerator 110, an output array in a first time period in such a way of sequentially outputting elements of the output array by taking priority in a second direction of dimension over a first direction of dimension of the output array, a process of dividing, by the hardware accelerator, the output array into a plurality of groups and storing the plurality of groups in a memory in such a way of sequentially storing the plurality of groups in the memory by taking priority in the second direction of dimension over the first direction of dimension, and a process of inputting the plurality of groups stored in the memory by reading the plurality of groups as an input array for input to the data operation part, in a second time period, by the hardware accelerator. In this case, the process of inputting includes a process of sequentially reading, by the hardware accelerator, the plurality of groups stored in the memory from the memory by taking priority in the first direction of dimension over the second direction of dimension, and a process of inputting, by the hardware accelerator, a series of elements of the input array disposed along the first direction of dimension to the data operation part if all of the series of elements are prepared.

In this case, a first number of groups may be defined along the first direction of dimension in the output array, a second number of groups may be defined along the second direction of dimension in the output array, at least a part or all of the plurality of groups may have the same group size as each other, a total size of data groups included in one column extending along the second direction of dimension may be smaller than or equal to a size of an output buffer accommodating a part of the output array output by the data operation part in the first time period, and a total size of data groups included in one column extending along the first direction of dimension may be smaller than or equal to a size of an input buffer accommodating a part of the input array received by the data operation part in the second time period.

In this case, the data operation part may be configured to sequentially receive the elements of the input array by taking priority in the first direction of dimension over the second direction of dimension of the input array in the second time period.

According to one aspect of the present invention, there may be provided a hardware accelerator including a control part 40 and a data operation part 610 that receives and processes an input array 310 composed of a plurality of non-compressed data groups NCG. In this case, the control part is configured to sequentially read the plurality of non-compressed data groups or a plurality of compressed data groups corresponding to the non-compressed data groups from a memory 11 by taking priority in a first direction of dimension 91 over a second direction of dimension 92 of the input array, when it is determined that the elements should be sequentially input to the data operation part by taking priority in the first direction of dimension over the second direction of dimension, and configured to input a series of elements of the input array disposed along the first direction of dimension to the data operation part if all of the series of elements are prepared.

In this case, the hardware accelerator may further include a decoding part 630. And the control part may be configured to sequentially read the plurality of compressed data groups corresponding to the plurality of non-compressed data groups constituting the input array from a memory 11 by taking priority in the first direction of dimension 91 over the second direction of dimension 92 of the input array, when it is determined that the elements should be sequentially input to the data operation part by taking priority in the first direction of dimension over the second direction of dimension, configured to decode each of the plurality of read compressed data groups to generate each of the non-compressed data groups corresponding to each of the compressed data groups, and configured to input a series of elements of the input array disposed along the first direction of dimension to the data operation part if all of the series of elements of the input array are prepared from the generated non-compressed data groups.

In this case, two or more data groups may be defined in the input array along the second direction of dimension.

In this case, the plurality of non-compressed data groups or the plurality of compressed data groups constituting the input array stored in the memory may be one that is sequentially stored in the memory by taking priority in the second direction of dimension over the first direction of dimension of the input array.

In this case, the input array 310 may be output data output by the data operation part before the process of acquiring, and the output data may be one that is output by the data operation part taking priority in the second direction of dimension over the first direction of dimension of the output array.

According to another aspect of the present invention, there may be provided a hardware accelerator including a control part 40 and a data operation part 610 that receives and processes an input array 310 composed of a plurality of non-compressed data groups NCG. In this case, the data operation part is configured to output an output array in a first time period in such a way of sequentially outputting elements of the output array by taking priority in a second direction of dimension over a first direction of dimension of the output array, the control part is configured to divide the output array into a plurality of groups and store the plurality of groups in a memory in such a way of sequentially storing the plurality of groups in the memory by taking priority in the second direction of dimension over the first direction of dimension, the control part is configured to perform a process of inputting the plurality of groups stored in the memory to the data operation part by reading the plurality of groups as an input array for input to the data operation part in a second time period, and in the process of inputting, the control part is configured to sequentially read the plurality of groups stored in the memory from the memory by taking priority in the first direction of dimension over the second direction of dimension and input a series of elements of the input array disposed along the first direction of dimension if all of the series of elements of the input array are prepared.

In this case, the hardware accelerator may further include an output buffer accommodating a part or the output array output by the data operation part in the first time period, and an input buffer accommodating a part or the input array received by the data operation part in the second time period. And a first number of groups may be defined along the first direction of dimension in the output array, a second number of groups may be defined along the second direction of dimension in the output array, at least a part or all of the plurality of groups may have the same group size as each other, a total size of data groups included in one column extending along the second direction of dimension may be smaller than or equal to a size of the output buffer, and a total size of data groups included in one column extending along first direction of dimension may be smaller than or equal to a size of the input buffer.

According to another aspect of the present invention, there may be provided a hardware accelerator 110 including a data operation part 610, a compression part 620, a control part 40, and a decoding part 630. The data operation part 610 is configured to output a first output array 331 based on a first input array 311 input to the data operation part 610 during a first operation time period T1, the first output array 331 is composed of N1*N2 non-compressed data groups NCG having N1 and N2 segments in a first direction of dimension 91 and a second direction of dimension 92, respectively (however, N1 is a natural number of 1 or more, and N2 is a natural number of 2 or more), the compression part 620 is configured to compress each of the non-compressed data groups NCG to generate N1*N2 compressed data groups CG, N2 non-compressed data groups NCG belonging to a (p+1)^{th} entry ((p+1)^{th} row) in the first direction of dimension 91 are compressed sequentially along the second direction of dimension after N2 non-compressed data groups NCG belonging to a p^{th} entry in the first direction of dimension 91 are sequentially compressed along the second direction of dimension 92 (however, p is a natural number of N1 or less), the control part 40 is configured to store the N1*N2 compressed data groups CG in a memory part 30, 11, and the control part 40 is configured to sequentially acquire N1 compressed data groups CG belonging to a q^{th} entry in the second direction of dimension 92 from the memory part 30, 11 along the first direction of dimension 91 and provide N1 compressed data groups CG to the decoding part 630, and then, to sequentially acquire N1 compressed data groups CG belonging to a (q+1)^{th} entry in the second direction of dimension 92 from the memory part 30, 11 along the first direction of dimension 91 and provide the N1 compressed data groups CG to the decoding part 630, the decoding part 630 is configured to respectively decode the provided N1*N2 compressed data groups and restore the N1*N2 non-compressed data groups, and the data operation part 610 is configured to output a second output array 332 based on the N1*N2 non-compressed data groups restored by the decoding part 630, during the second operation time period T2.

In this case, the data operation part may be configured to process the first input array and output the first output array having a dimension of 2 or more during the first operation time period, and to sequentially output elements belonging to a k^{th} entry (k^{th} row) in the first direction of dimension 91 of the first output array along the second direction of dimension 92 and then sequentially output elements belonging to a (k+1)^{th} entry ((k+1)^{th} row) in the first direction of dimension 91 along the second direction of dimension 92.

The data operation part may be configured to sequentially receive elements of the input array by taking priority in the first direction of dimension over the second direction of dimension of the input array in the second time period.

According to another aspect of the present invention, there may be provided a hardware accelerator including a control part 40 and a data operation part 610. The data operation part is configured to output an output array in a first time period in such a way of sequentially outputting elements of the output array by taking priority in a second direction of dimension over a first direction of dimension of the output array, the control part is configured to divide the output array into a plurality of data groups and store the plurality of data groups in a memory in such a way of sequentially storing the plurality of data groups in the memory by taking priority in the second direction of dimension over the first direction of dimension, the control part is configured to perform a process of inputting the plurality of groups stored in the memory to the data operation part by reading the plurality of groups as an input array for input to the data operation part in a second time period, and, in the process of inputting, the control part may be configured to sequentially reads the plurality of data groups stored in the memory from the memory by taking priority in the first direction of dimension over the second direction of dimension and input a series of elements of the input array disposed along the first direction of dimension if all of the series of elements are prepared.

In this case, the hardware accelerator may further include an output buffer accommodating a part or the output array output by the data operation part in the first time period, and an input buffer accommodating a part or the input array received by the data operation part in the second time period. In this case, a total size of data groups included in one column extending along the second direction of dimension may be smaller than or equal to a size of the output buffer, and a total size of data groups included in one column extending along first direction of dimension may be smaller than or equal to a size of the input buffer.

According to one aspect of the present invention, a computing device including the hardware accelerator described above may be provided.

### ADVANTAGEOUS EFFECTS

According to the present invention, it is intended to provide a method of grouping (fragmenting) and compressing elements of an output array output by the data operation part of the hardware accelerator, and a scheduling technology for loading data stored in a DRAM after being grouped (fragmented).

### BRIEF DESCRIPTION OF THE DRAWINGS

FIG. 1 conceptually illustrates a partial configuration of a neural network proposed to aid understanding of the present invention.
FIG. 2 illustrates a main structure of some of a neural network operating device including a neural network accelerating part that implements the function of the neural network in hardware and a computing device including the same.
FIG. 3 illustrates a structure of an output array 330 of FIG. 2.
FIG. 4 is a diagram for describing some constraints considered in the present invention as constraints that may occur in some embodiments.
FIGS. 5a to 5c are diagrams presented to explain problems in a data processing method according to an embodiment.
FIG. 6 illustrates a main structure of some of a hardware accelerator provided according to an embodiment of the present invention and a computing device including the same.
FIG. 7 is a diagram illustrating a method in which a data operation part operates over time according to an embodiment of the present invention.
FIGS. 8a and 8b illustrate a method of grouping and elements of an output array output by the data operation part according to an embodiment of the present invention, and FIG. 8c is a diagram illustrating an order of reading compressed data groups from a memory part and an order of decoding the compressed data groups according to an embodiment of the present invention.
FIGS. 9a and 9b illustrate an order of grouping, compressing, and storing the output array output by the data operation part in the memory part according to another embodiment of the present invention, and FIG. 9c illustrates an order of reading and decompressing (decoding) groups stored in the memory part.
FIGS. 10a, 10b, and 10c are diagrams for describing a correlation relationship between a size of each data group and a size of an output buffer and an input buffer according to an embodiment of the present invention.
FIG. 11 is a conceptual diagram illustrating the form of an input array or output array of a neural network accelerating part provided according to an embodiment of the present invention.

### MODE FOR CARRYING OUT THE INVENTION

Hereinafter, embodiments of the present invention will be described with reference to the accompanying drawings. However, the present invention is not limited to the embodiments described herein and may be implemented in various other forms. Terms used in this specification are intended to aid understanding of the embodiments, and are not intended to limit the scope of the present invention. Also, the singular forms used below include the plural forms as well unless the phrases clearly indicates the opposite meaning.

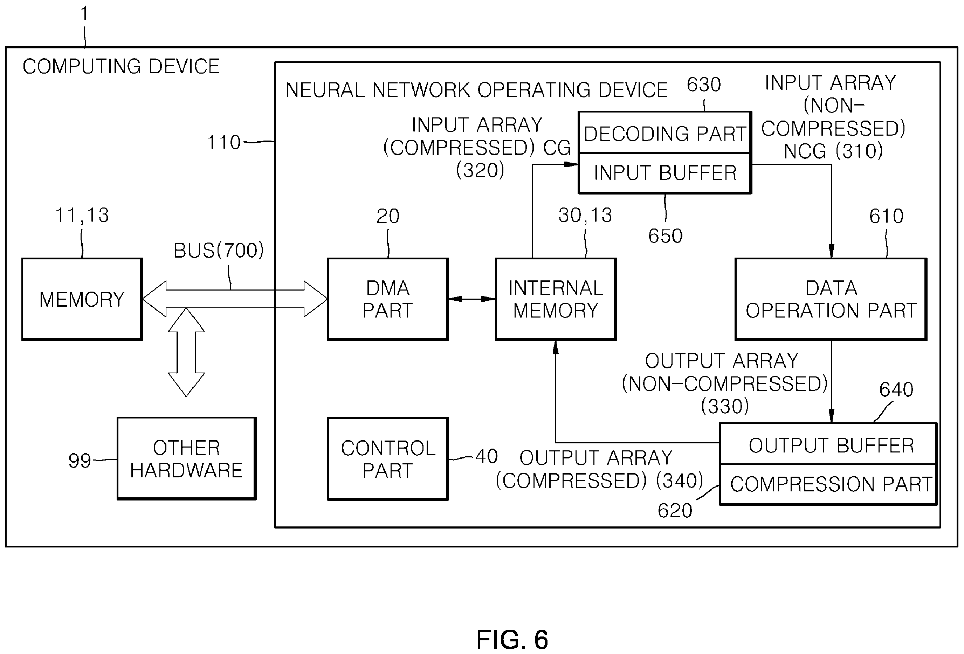

FIG. 6 illustrates a main structure of some of the hardware accelerator provided according to an embodiment of the present invention and a computing device including the same.

A computing device 1 can include a memory 11, a hardware accelerator 110, a bus 700 connecting the memory 11 and the hardware accelerator 110, and other hardware 99 connected to the bus 700.

In addition, the computing device 1 can further include a power supply part, a communication part, a main processor, a user interface, a storage part, and peripheral device part, which are not illustrated. The bus 700 may be shared by the hardware accelerator 110 and other hardware 99.

The hardware accelerator 110 can include a direct memory access part 20, a control part 40, an internal memory 30, a compression part 620, a decoding part 630, a data operation part 610, an output buffer 640, and an input buffer 650.

In FIG. 6, the decoding part 630, the compression part 620, the output buffer 640, the input buffer 650, and the internal memory 30 are individual components different from each other, but in a modified embodiment, the decoding part 630, the compression part 620, the output buffer 640, the input buffer 650, and the internal memory 30 may also be provided as one single functional part.

The memory 11, the hardware accelerator 110, and the data operation part 610 may be, for example, the DRAM 10, the neural network operating device 100, and the neural network accelerating part 60 illustrated in FIG. 2, respectively, but is not limited thereto.

In order for the data operation part 610 to operate, the input array 310 should be provided to the data operation part 610. The input array 310 may be a set of data in the form of a multi-dimensional array.

The input array 310 provided to the data operation part 610 may be one that is output from the internal memory 30.

The internal memory 30 can receive at least a part or all of the input array 310 from the memory 11 through the bus 700. In this case, in order to move the data stored in the memory 11 to the internal memory 30, the control part 40 and the DMA part 20 may control the internal memory 30 and the memory 11.

When the data operation part 610 operates, an output array 330 can be generated based on the input array 310. The output array 330 may be a set of data in the form of a multi-dimensional array.

The generated output array 330 can be stored in the internal memory 30 first.

The output array 330 stored in the internal memory 30 can be recorded in the memory 11 under the control of the control part 40 and the DMA part 20.

The control part 40 may comprehensively control the operations of the DMA part 20, the internal memory 30, and the data operation part 610.

In one example of implementation, the data operation part 610 can perform a first function during a first time period and a second function during a second time period. The second function may be different from the first function.

For example, the data operation part 610 can perform, for example, the function of the first layer 610 illustrated in FIG. 1 during the first time period, and perform, for example, the function of the second layer 620 illustrated in FIG. 1 during the second time period.

In one embodiment, a plurality of data operation parts, each of which performs the same function as the data operation part 610 illustrated in FIG. 6, may be provided to respectively perform operations requested by the control part 40 in parallel.

In one example of implementation, the data operation part 610 can sequentially output all data of the output array 330 over time time without outputting the all data at once.

The compression part 620 can compress the output array 330 so as to reduce an amount of data of the output array 330 and provide the compressed output array 330 to the internal memory 30. As a result, the output array 330 can be stored in the memory 11 as an array 340 in a compressed state.

The output buffer 640 may have a storage space smaller than the size of the output array 330. Data constituting the output array 330 can be output sequentially over time. First of all, only first sub-data, which is output first, of the output array 330 can be stored in the output buffer 640, and the first sub-data stored in the output buffer 640 can be compressed by the compression part 620 and transferred to the memory 11. After that, second sub-data, which is another part of the output array 330 output later, can be transferred to the memory 11 through the same process.

The input array 310 input to the data operation part 610 may be one that is read from the memory 1. Data read from the memory 11 may be one that is compressed, and can be decoded by the decoding part 630 and converted into the input array 310 before being provided to the data operation part 610.

The input buffer 650 may have a storage space smaller than the size of the input array (non-compressed) 310. Data constituting the input array (compressed) 320 can be sequentially provided over time. First of all, only first sub-data, which is provided first, of the input array (compressed) 320, can be stored in the input buffer 650, and the first sub-data stored in the input buffer 650 can be decoded by the decoding part 630 and input to the data operation part 610. After that, second sub-data, which is another part of the input array (compressed) 320 provided later, can be input to the data operation part 610 through the same process.

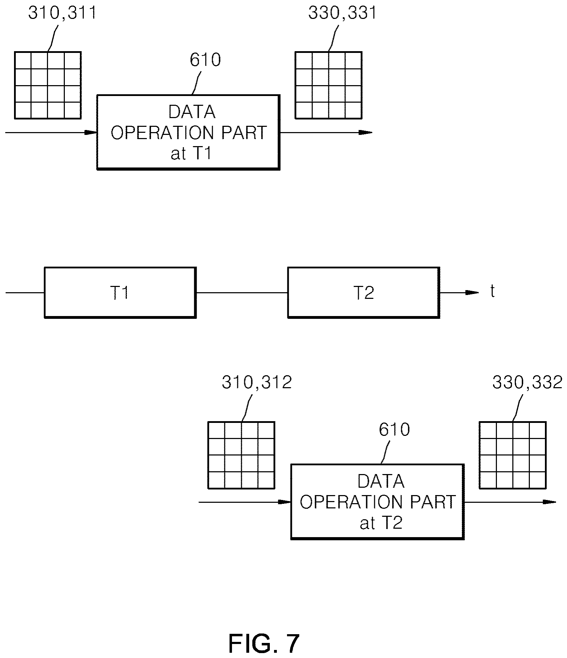

FIG. 7 is a diagram illustrating a method in which the data operation part operates over time according to an embodiment of the present invention.

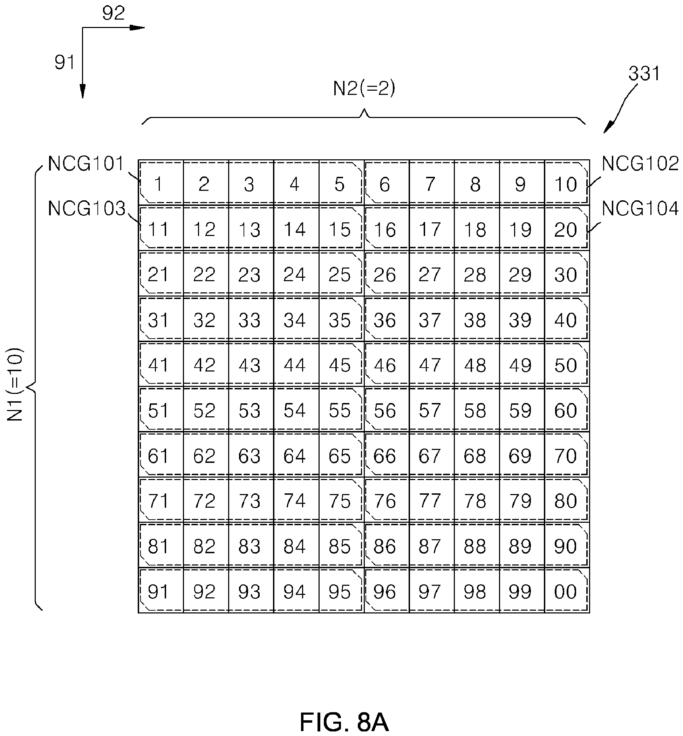

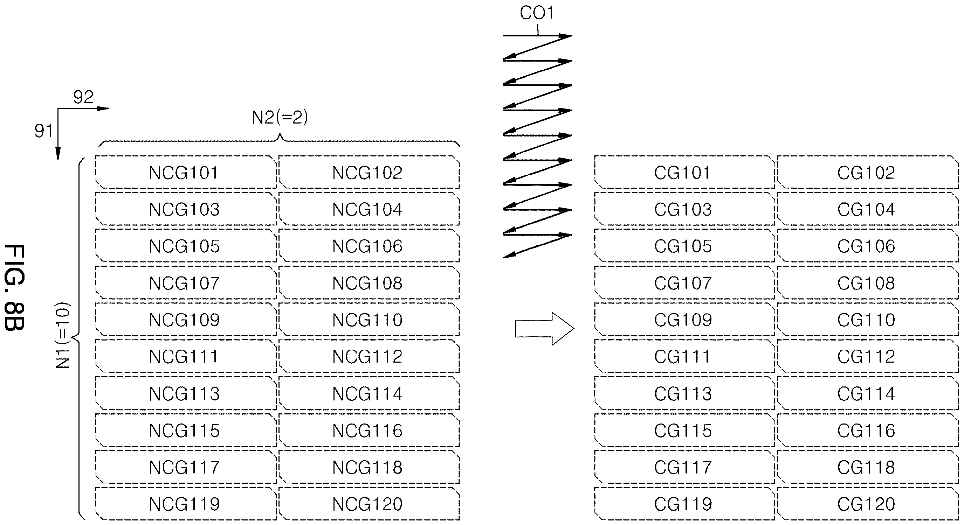

FIGS. 8a and 8b illustrate a method of grouping and compressing the output array output by the data operation part according to an embodiment of the present invention.

Hereinafter, a description will be made with reference to FIGS. 6, 7, 8a, and 8b together.

The data operation part 610 may be configured to output a first output array 331 based on a first input array 311 input to the data operation part 610 during a first operation time period T1 (FIG. 7).

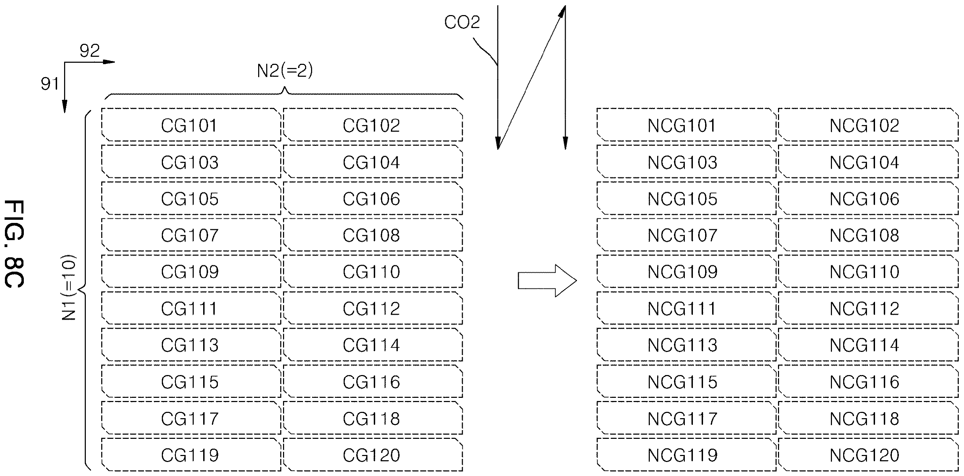

The first output array 331 may be composed of N1*N2 non-compressed data groups having N1 and N2 segments in the first direction of dimension 91 and the second direction of dimension 92, respectively. Here, N1 may be a natural number of 1 or more and N2 may be a natural number of 2 or more (FIG. 8) .

In the example illustrated in FIG. 8a, N1 = 10 and N2 = 2. Each area indicated by a dotted line in FIG. 8a corresponds to one non-compressed data group.

FIG. 8b illustrates the concept of the non-compressed data groups more clearly by displaying only the dotted line portion illustrated in FIG. 8a. Referring to FIG. 8b, a total of 20 non-compressed data groups are presented, from a non-compressed data group NCG101 to a non-compressed data group NCG120. When comparing with FIG. 8b, in FIG. 8a, reference numerals are presented only for the non-compressed data group NCG101 to the non-compressed data group NCG104 due to restrictions on representation on the drawing.

Hereinafter, a reference sign called NCG (Non-Compressed Data Group) may be be given as a common name for non-compressed data groups denoted by different reference numerals in this specification.

The compression part 620 may be configured to compress the respective non-compressed data groups NCGs to generate N1*N2 compressed data groups CG.

In FIG. 8B, compressed data groups CG that respectively correspond to the 20 non-compressed data groups NCG presented in FIG. 8B are denoted by using the reference sign CG (Compressed Group).

Hereinafter, a reference sign CG (Compressed data Group) may be given as a common name for compressed data groups denoted by different reference numerals in this specification.

The NCG and CG described above in this specification may be collectively referred to as a data group (G).

The data amount of an arbitrary k-th non-compressed data group is greater than that of a k-th compressed data group corresponding to the arbitrary k-th non-compressed data group.

In one embodiment, in order to start generating the k-th compressed data group, all data of the k-th non-compressed data group may need to be prepared. In addition, in order to restore the arbitrary k-th non-compressed data group from the k-th compressed data group, all data belonging to the k-th compressed data group may be requested.

In one embodiment of the present invention, N2 non-compressed data groups NCG belonging to a (p+1)^{th} entry ((p+1)^{th} row of FIG. 8B) in the first direction of dimension 91 may be compressed sequentially along the second direction of dimension after N2 non-compressed data groups NCG belonging to a p^{th} entry in the first direction of dimension 91 are sequentially compressed along the second direction of dimension 92, In this case, p may be a natural number less than N1.

That is, it can be said that, in one embodiment of the present invention, the compression order of the non-compressed data groups defined in the output array output by the data operation part 610 takes priority in the second direction of dimension over the first direction of dimension. In FIG. 8b, a first processing sequence of compressing the non-compressed data groups is indicated by a reference numeral CO1.

In this regard, in the example illustrated in FIG. 8b, a total of two non-compressed data groups are included in one p^{th} entry. In FIG. 8b, if it is assumed that the p^{th} entry is, for example, a row to which the non-compressed data group NCG101 and the non-compressed data group NCG102 belong, the compression order of the non-compressed data groups belonging to the p^{th} entry and the (p+1)^{th} entry is G101, G102, G103, G104.

Referring back to FIG. 6, the control part 40 may be configured to store the N1*N2 compressed data groups CG in the memory part 13. Here, the memory part 13 may collectively refer to the internal memory 30 inside the hardware accelerator 110 and the memory 11 outside the hardware accelerator 110. In this configuration, each compressed data group CG can be stored in the memory 11 via the internal memory 30. The internal memory 30 may have a significantly smaller memory capacity than that of the memory 11.

Referring back to FIG. 7, the data operation part 610 may be configured to output a second output array 332 based on a second input array 312 input to the data operation part 610 during a second operation time period T2.

In this case, the second input array 312 may be one that is obtained from the N1*N2 compressed data groups CG stored in the memory part 13.

FIG. 8c is a diagram illustrating an order of reading compressed data groups from the memory part and an order of decoding the compressed data groups according to an embodiment of the present invention.

The control part 40 can access the N1*N2 compressed data groups CG obtained from the memory part 13 according to a second processing sequence CO2 that is different from the first processing sequence CO1.

The control part 40 may be configured to sequentially acquire N1 compressed data groups CG belonging to the q^{th} entry (q^{th} column of FIG. 8a) in the second direction of dimension 92 from the memory part 30, 11 along the first direction of dimension 91 and provide the N1 compressed data groups CG to the decoding part 630, and then, to sequentially acquire N1 compressed data groups belonging to the (q+1)^{th} entry ((q+1)^{th} column of FIG. 8a) in the second direction of dimension 92 from the memory part 30, 11 along the first direction of dimension 91 and provide the N1 compressed data groups to the decoding part 630.

That is, in relation to the second processing sequence, it can be said that, in one embodiment of the present invention, the decoding order of the compressed data groups to be input to the data operation part 610 in the second operation time period T2 takes priority in the first direction of dimension 91 over the second direction of dimension 92. In other words, regarding the decoding order of compressed data groups, the first direction of dimension 91 takes priority over the second direction of dimension 92.

As such, in one embodiment of the present invention, the compression order for the non-compressed data group/compressed data group defined in the output array generated in the first operation time period T1 may be different from the decoding order for reconfiguring the output array for reuse.

In addition, as such, in one embodiment of the present invention, the order of recording the non-compressed data group/compressed data group defined in the output array generated in the first operation time period T1 in the memory may be different from the order of reading the non-compressed data group/compressed data group from the memory for reusing the output array.

The second processing sequence CO2 may be associated with an order in which the data operation part 610 receives input data during the second operation time period T2. For example, if the data operation part 610 is configured to receive elements of the input array to be input to the data operation part 610 by taking priority in the first direction of dimension 91 over the second direction of dimension 92 during the second operation time period T2, the decoding order of compressed data groups to be input to the data operation part 610 in the second operation time period T2 also may take priority in the first direction of dimension 91 over the second direction of dimension 92.

In contrast, if the data operation part 610 is configured to receive the elements of the input array to be input to the data operation part 610 by taking priority in the second direction of dimension 92 over the first direction of dimension 91 during the second operation time period T2, the decoding order of compressed data groups to be input to the data operation part 610 in the second operation time period T2 may also take priority in the second direction of dimension 92 over the first direction of dimension 91.

Accordingly, the control part 40 should know in advance the order in which the data operation part 610 receives the elements of the input array to be input to the data operation part 610 during the second operation time period T2, and can read the compressed data groups from the memory part 13 in this order.

According to the configuration of the present invention described above, the following effects can be obtained. That is, referring to FIG. 8C, when assuming that the elements of the input array to be input to the data operation part 610 are received by taking priority in the first direction of dimension 91 over the second direction of dimension 92, if only the non-compressed data groups NCG101, NCG103, NCG105, NCG107, NCG109, NCG111, NCG113, NCG115, NCG117, and NCG119 are ready, input data required for the data operation part 610 can be continuously and easily input. And while the data is input to the data operation part 610, other non-compressed data groups NCG102, NCG104, NCG106, NCG108, NCG110, NCG112, NCG114, NCG116, NCG118, and NCG120 may be read from the memory part 13 and prepared.

If, for example, the compressed data group CG101 and the compressed data group CG102 are compressed as a single group instead of being stored as being divided into two or more as illustrated in FIG. 8c, a problem may occur in continuously inputting the input data required for the data operation part 610 before all compressed data groups related to the output array 331 stored in the memory part 13 are read and decoding is completed.

One of the main ideas of the present invention is that data is compressed and stored after being divided into two or more groups in a specific dimension direction so that data compressed and stored by group in the memory part 13 can be optimized and prepared according to input requirements of the data operation part to receive the data.

In addition, another one of the main ideas of the present invention is that, before reading data compressed and stored by group from the memory part 13, the control part 40, which controls the reading, obtains an input order of the data operation part to receive the data in advance, reads each compressed data group according to the obtained input order, and decodes each compressed data group according to this order.

The decoding part 630 may be configured to respectively decode the provided N1*N2 compressed data groups and restore the N1*N2 non-compressed data groups. The data operation part 610 may be configured to output the second output array 332 based on the N1*N2 non-compressed data groups restored by the decoding part 630, during the second operation time period T2.

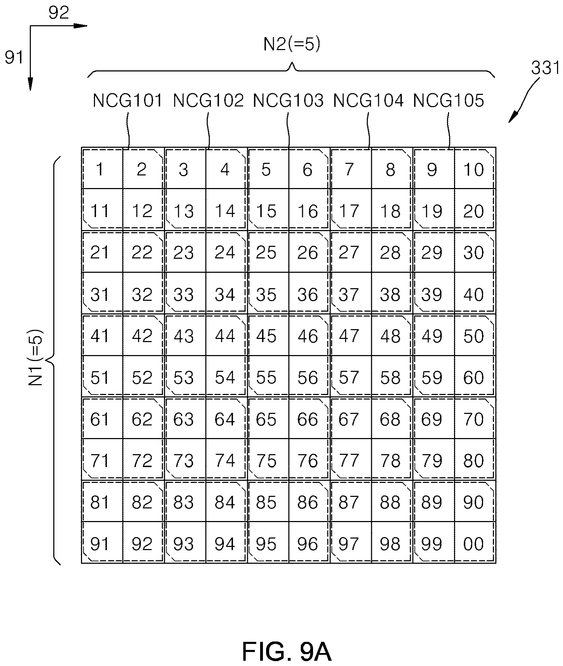

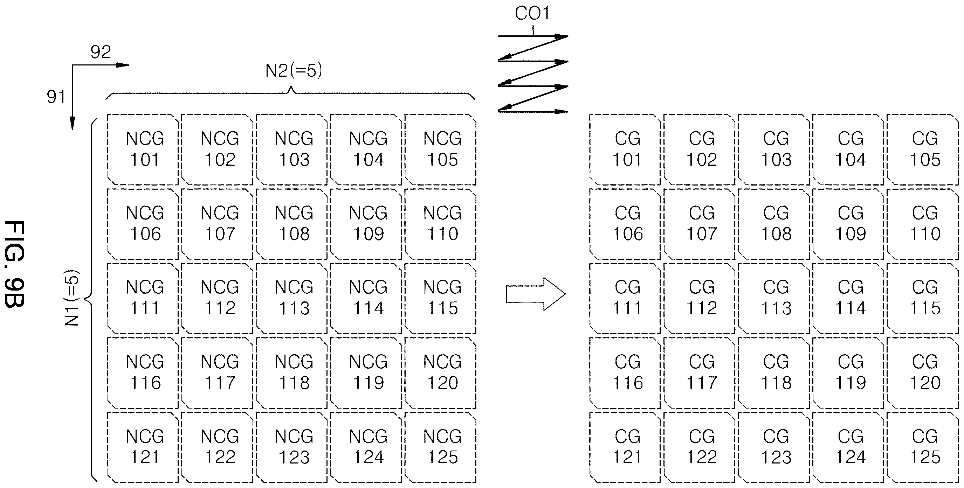

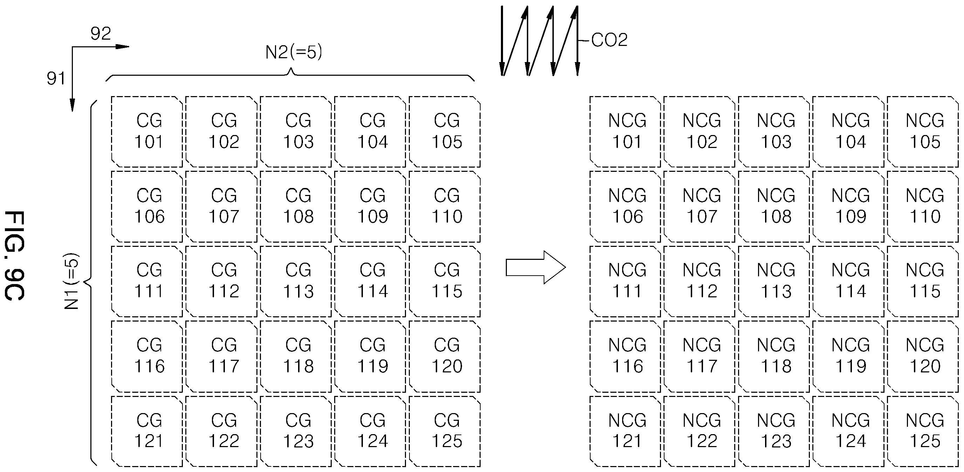

FIGS. 9a and 9b illustrate an order of grouping, compressing, and storing the output array output by the data operation part in the memory part according to another embodiment of the present invention, and FIG. 9c illustrates an order of reading and decompressing (decoding) groups stored in the memory part.

FIGS. 9a, 9b, and 9c correspond to FIGS. 8a, 8b, and 8c, respectively. Accordingly, the descriptions described above presented in relation to FIGS. 8a, 8b, and 8c, may be applied to FIGS. 9a, 9b, and 9c as it is.

FIGS. 9a, 9b, and 9c are diagrams for describing various methods of grouping elements of the input array or output array according to an embodiment of the present invention, and the dimension of one data group can be set freely. However, it is preferable that the data group can be divided into a plurality of groups along a dimension in a specific direction.

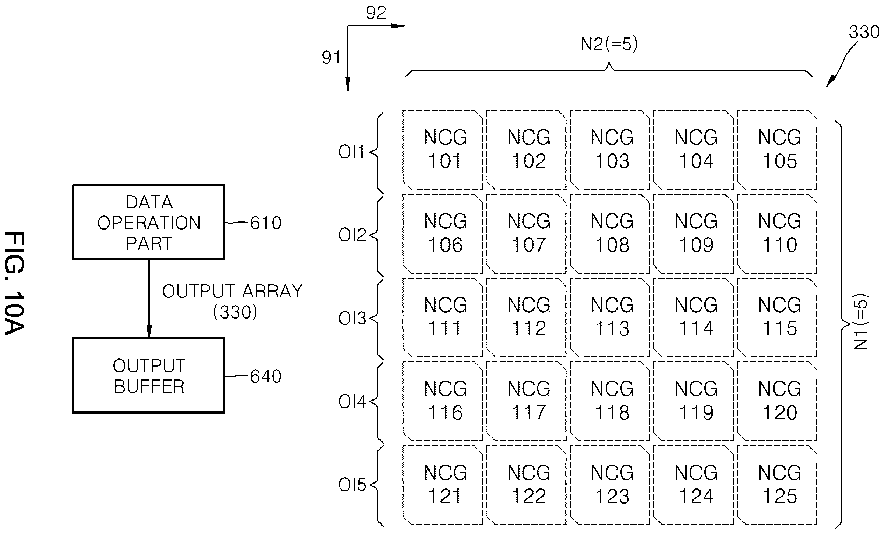

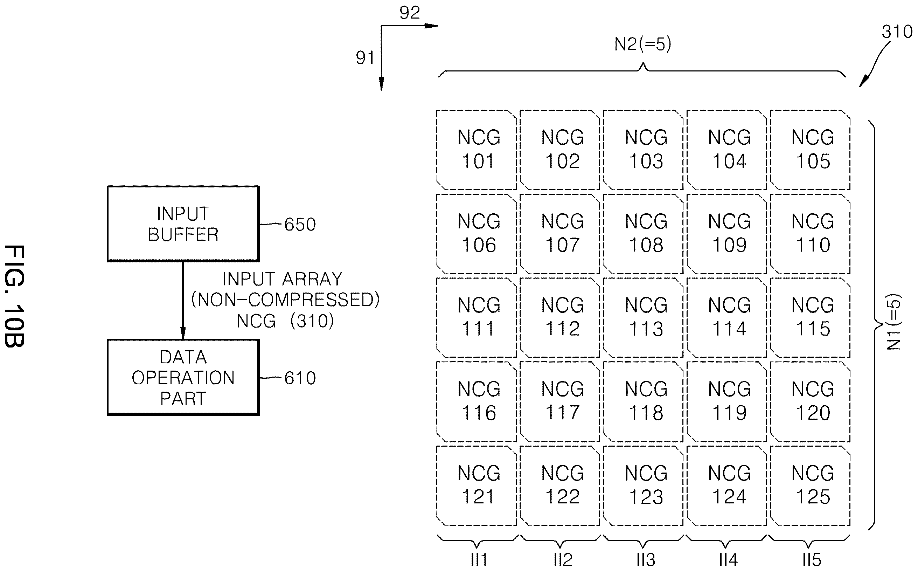

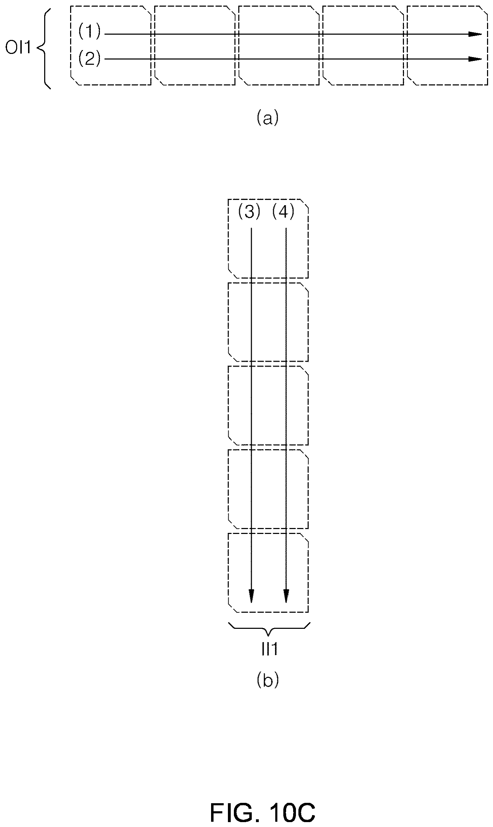

FIGS. 10a, 10b, and 10c are diagrams for describing a correlation relationship between a size of each data group and a size of an output buffer and an input buffer according to an embodiment of the present invention.

Referring to FIG. 10a, the data operation part 610 can output the output array 330. The output array 330 can be divided into five (= N1) data groups along the first direction of dimension 91, and divided into five (= N2) data groups along the second direction of dimension 92.

Each data group NCG can have a plurality of elements along the first direction of dimension 91 and a plurality of elements along the second direction of dimension 92.

The output buffer 640 may be smaller than the total size of the output array 330.

In this case, the data operation part 610 can sequentially output the elements of the output array 330 by taking priority in the second direction of dimension 92. As represented in a column of data groups OI1 illustrated in FIG. 10c, respective elements of the output array 330 can be sequentially output in the order of (1) to (2). Referring to FIG. 10a, as the data operation part 610 sequentially outputs the respective elements of the output array 330, respective data groups may be completed in the order of increasing reference numeral starting from reference numeral 101.

When the data groups OI1 of the first row in FIG. 10a are stored in the output buffer 640, the data stored in the output buffer 640 may be transferred to the memory by data group or may be compressed by data group and transferred to the memory. Next, the data stored in the output buffer 640 is deleted, and the above process may be repeated for the data groups OI2 of the second row.

In this case, in order to compress the elements that are sequentially output by data group described above, the size of the output buffer 640 should be greater than or equal to the size of the data groups OI1 of the first row.

Referring to FIG. 10b, the data operation part 610 can receive the input array 310. The input array 310 may have the same data as that of the output array 330 illustrated in FIG. 10a.

The input buffer 650 may be smaller than the total size of the input array 310.

In this case, the data operation part 610 can sequentially receive input elements of the input array 330 by taking priority in the first direction of dimension 91. As represented in the data groups II1 of one column illustrated in FIG. 10c, respective elements of the input array 310 can be sequentially input in the order of (3) to (4). Referring to FIG. 10b, data groups can be secured in the order of the data group NCG101, data group NCG106, data group NCG111, data group NCG116, and data group NCG121, ... by reading the respective groups of the input array 310 by taking priority in the first direction of dimension 91.

If the data groups II1 of the first column in FIG. 10b are stored in an input buffer 650, elements stored in the input buffer 650 can be input to the data operation part 610. Next, the data stored in the input buffer 650 is deleted, and the above process may be repeated for the data groups II2 of the second row.

In this case, in order to prepare elements to be sequentially input in the order of (3) to (4) described above, the size of the input buffer 640 should be greater than or equal to the size of the data groups II1 of the first column.

In FIG. 10a, an example in which each data group NCG has the same size is presented. In a preferred embodiment, all data groups may have the same size. However, in another embodiment, since a case where the data array is not exactly an integer multiple of the input buffer and output buffer may occur, data groups existing at some edges may have a smaller size. For example, in FIG. 10a, NCG 105, NCG 110, NCG 115, NCG 120, and NCG 125, which are data groups at the rightmost edge, may have a smaller size than NCG 101, which is the first data group to be generated. Otherwise, for example, NCG 121, NCG 122, NCG 123, NCG 124, and NCG 125, which are the lowest data groups in FIG. 10a, may have a smaller size than NCG 101. It can be easily understood that the same situation can be applied to each data group NCG illustrated in FIG. 10b.

In one embodiment of the present invention, a first number N1 of data groups can be defined along the first direction of dimension in the output array, and a second number N2 of data groups can be defined in the output array along the second direction of dimension.

In this case, in a preferred embodiment of the present invention, the second number of data groups may be defined along the second direction of dimension in the output array, all of the plurality of data groups may have the same group size, and a value obtained by multiplying the second number by the group size may be smaller than or equal to the size of the output buffer. That is, the total size of one column of data groups extending along the second direction of dimension may be smaller than or equal to the size of the output buffer.

Alternatively, in another embodiment of the present invention, the second number of data groups may be defined along the second direction of dimension in the output array, some of the data groups (for example, (N2 - 1) data groups) among the plurality of data groups may have the same group size, and the remaining data groups (for example, the last one data group provided along the second direction of dimension) may have a smaller group size than the same group size. In this case, a total size of one column of data groups extending along the second direction of dimension may be smaller than or equal to the size of the output buffer.

In addition, in a preferred embodiment of the present invention, the first number of data groups may be defined along the first direction of dimension in the output array, all of the plurality of data groups may have the same group size, and a value obtained by multiplying the first number by the group size may be smaller than or equal to the size of the input buffer. That is, the total size of one column of data groups extending along the first direction of dimension may be smaller than or equal to the size of the input buffer.

Alternatively, in another embodiment of the present invention, the first number of data groups may be defined along the first direction of dimension in the output array, at least some of the plurality of data groups (for example, (N1 - 1) data groups) may have the same group size, and the remaining data groups (for example, the last one data group provided along the first direction of dimension) may have a smaller group size than the same group size. In this case, the total size of one column of data groups extending along the first direction of dimension may be smaller than or equal to the size of the input buffer.

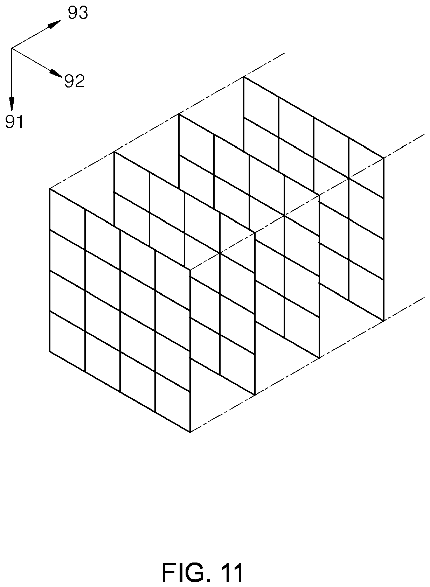

FIG. 11 is a conceptual diagram illustrating the form of an input array or output array of a neural network accelerating part provided according to an embodiment of the present invention.

Although the output array and the input array are presented as having a two-dimensional array form in FIGS. 1 to 9, the output array or the input array may have a three-dimensional array form as illustrated in FIG. 10. In addition, the output array and the input array may have an array shape having a dimension of 4 dimensions or more (not illustrated). However, it can be understood that the present invention can be applied even when the output array or the input array is a three-dimensional or higher multi-dimensional array.

In a modified embodiment of the present invention, the compression part 620 and the decoding part 630 of FIG. 6 can be omitted. That is, the non-compressed data group can be stored in the memory part 13 as it is without going through a compression process.

Using the embodiments of the present invention described above, those skilled in the art will be able to easily implement various changes and modifications without departing from the essential characteristics of the present invention. The content of each claim of the claims may be combined with other claims without being related to citation within the scope understandable through this specification.

<Acknowledgment>

The present invention was developed, by OPENEDGES Technology Co., Ltd. (project implementation agency), in the process of carrying out a research project on the development of multisensory-based context predictive mobile artificial intelligence processors (project ID number 2020-0-01310, task number 2020-0-01310, research period 2020.04.01 - 2024.12.31) among Next-generation intelligent semiconductor technology development (design)-artificial intelligence processor business, which is a research project supported by Ministry of Science and ICT and Information and Communications Technology Planning and Evaluation Institute affiliated with the National Research Foundation of Korea.

## Claims

1. A hardware accelerator comprising:
a control part 40; and
a data operation part 610 receiving and processing an input array 310 composed of a plurality of non-compressed data groups NCG, wherein
the control part is configured to perform,
if it is determined that elements should be sequentially input to the data operation part by taking priority in a first direction of dimension 91 over a second direction of dimension 92 of the input array, a process of sequentially reading the plurality of non-compressed data groups or a plurality of compressed data groups corresponding to the plurality of non-compressed data groups from a memory 11 by taking priority in the first direction of dimension over the second direction of dimension, and
if all of a series of elements of the input array disposed along the first direction of dimension are prepared, a process of inputting the series of elements to the data operation part.

2. The hardware accelerator of claim 1, wherein
two or more data groups are defined in the input array along the second direction of dimension.

3. The hardware accelerator of claim 1, wherein
the plurality of non-compressed data groups or the plurality of compressed data groups constituting the input array stored in the memory are sequentially stored in the memory by taking priority in the second direction of dimension over the first direction of dimension of the input array.

4. The hardware accelerator of claim 3, wherein
the input array 310 is output data output by the data operation part before the receiving, and
the output data is one that is output by the data operation part by taking priority in the second direction of the dimension over the first direction of dimension of the output array.

5. The hardware accelerator of claim 1, wherein
the hardware accelerator is configured to sequentially read the plurality of compressed data groups respectively corresponding to the plurality of non-compressed data groups constituting the input array from a memory 11 by taking priority in the first direction of dimension 91 over the second direction of dimension 92 of the input array, when it is determined that the elements should be sequentially input to the data operation part by taking priority in the first direction of dimension over the second direction of dimension, and
the process of inputting comprises
a process of decoding each of the read compressed data groups to generate each non-compressed data group NCG corresponding to each compressed data group, and
a process of inputting the series of elements of the input array disposed along the first direction of dimension to the data operation part if all of the series of elements of the input array are prepared from the generated non-compressed data groups.

6. A hardware accelerator comprising:
a control part 40; and
a data operation part 610, wherein
the data operation part is configured to output an output array in such a way of sequentially outputting elements of the output array by taking priority in a second direction of dimension over a first direction of dimension of the output array, in a first time period,
the control part is configured to divide the output array into a plurality of groups and store the plurality of groups in a memory in such a way of sequentially storing the plurality of groups in the memory by taking priority in the second direction of dimension over the first direction of dimension,
the control part is configured to perform a process of inputting the plurality of groups stored in the memory to the data operation part by reading the plurality of groups as an input array for input to the data operation part in a second time period, and
in the process of inputting, the control part is configured to sequentially read the plurality of groups stored in the memory from the memory by taking priority in the first direction of dimension over the second direction of dimension and input a series of elements of the input array disposed along the first direction of dimension to the data operation part if all of the series of elements are prepared.

7. The hardware accelerator of claim 6, wherein
a total size of data groups included in one row extending along the second direction of dimension is smaller than or equal to a size of an output buffer accommodating a part of the output array output by the data operation part in the first time period, and
a total size of data groups included in one column extending along first direction of dimension is smaller than or equal to a size of an input buffer accommodating a part of the input array received by the data operation part in the second time period.

8. The hardware accelerator of claim 7, wherein
the data operation part is configured to sequentially receive the elements of the input array by taking priority in the first direction of dimension over the second direction of dimension of the input array in the second time period.

9. The hardware accelerator of claim 6, further comprising:
an output buffer accommodating a part of the output array output by the data operation part in the first time period; and
an input buffer accommodating a part of the input array received by the data operation part in the second time period, wherein
a total size of data groups included in one row extending along the second direction of dimension is smaller than or equal to a size of the output buffer, and
a total size of data groups included in one column extending along first direction of dimension is smaller than or equal to a size of the input buffer.

10. A hardware accelerator comprising the hardware accelerator according to any one of claims 1 to 9.
